# EUROPÄISCHE PATENTSCHRIFT

(11) **EP 2 758 296 B1**
(45) Veröffentlichungstag und Bekanntmachung des Hinweises auf die Patenterteilung: **20.07.2016**
(21) Anmeldenummer: 12762213.2
(22) Anmeldetag: 13.09.2012
(51) Int. Cl.: G08G 1/14, B62D 15/02, G01C 21/26

(54) **VERFAHREN ZUR KLASSIFIKATION VON PARKSZENARIEN FÜR EIN EINPARKSYSTEM EINES KRAFTFAHRZEUGS**
METHOD FOR CLASSIFYING PARKING SCENARIOS FOR A SYSTEM FOR PARKING A MOTOR VEHICLE
PROCÉDÉ DE CLASSIFICATION DE SCÉNARIOS DE STATIONNEMENT POUR UN SYSTÈME DE STATIONNEMENT DE VÉHICULE À MOTEUR

(30) Priorität: 21.09.2011 DE 102011113916
(43) Veröffentlichungstag der Anmeldung: 30.07.2014
(73) Patentinhaber: Volkswagen Aktiengesellschaft, 38440 Wolfsburg (DE)
(72) Erfinder: BRÜNING, Stefan, 10783 Berlin (DE); TERKES, Mehmet, 38102 Braunschweig (DE); WENDLER, Torsten, 38100 Braunschweig (DE)
(86) Internationale Anmeldenummer: PCT/EP2012/003839
(87) Internationale Veröffentlichungsnummer: WO 2013/041197

(56) Entgegenhaltungen:
- EP-A1- 2 011 701
- WO-A1-2011/029693
- DE-A1-102010 008 545
- JP-A- 2001 199 298
- JP-A- 2009 205 191
- US-A1- 2003 074 129

## Beschreibung

Die Erfindung betrifft ein Verfahren zur Klassifikation von Parkszenarien für ein Einparksystem eines Kraftfahrzeugs gemäß dem Oberbegriff des Anspruchs 1 sowie ein Einparkassistenzsystem zum unterstützten Einparken eines Kraftfahrzeugs gemäß dem Oberbegriff des Anspruchs 4.

Systeme, die den Fahrer eines Kraftfahrzeuges beim Einparken unterstützen, also Einparksysteme oder Parkhilfesysteme, gehören zur Gruppe der Fahrerassistenzsysteme, die zunehmend in Fahrzeugen zur Erhöhung des Komforts, zur Unterstützung des Fahrers und/oder zur Erhöhung der Sicherheit eingesetzt werden. Diesen Systemen ist gemeinsam, dass sie mit einer geeigneten Messvorrichtung die Umgebung des eigenen Fahrzeugs vermessen und mittels diverser Algorithmen Parklücken mehr oder weniger gut erkennen und vermessen können.

Insbesondere ist die Suche nach ausreichend großen Parklücken, gefolgt von entsprechenden Einparkmanövern, eine alltägliche Herausforderung von Fahrern von Kraftfahrzeugen. Gleichzeitig hat die Entwicklung des Fahrzeugdesigns sowohl aus optischen als auch aus sicherheitstechnischen Gründen stetig den einsehbaren Bereich um das Fahrzeug reduziert und so die Einparkaufgabe zusätzlich erschwert. Um den Fahrer daher zu entlasten und Souveränität zurück zu geben, sind diverse Parkassistenzsysteme entwickelt worden, die den Fahrer eines Kraftfahrzeuges beim Einparken unterstützen oder in der Endausbaustufe das Einparken selbsttätig durchführen sollen.

In seiner einfachsten Form ist ein derartiger Einparkassistent eine Einparkhilfe, bei der die Abstände des Fahrzeugs nach vorne und/oder nach hinten zu anderen Fahrzeugen oder Hindernissen gemessen und beispielsweise auf einem Display im Cockpit angezeigt werden. Im Fall des Unterschreitens vorgegebener Sicherheitsabstände wird eine optische, akustische und/oder haptische Warnung an den Fahrer ausgegeben, so dass dieser seinen Einparkvorgang entsprechend steuern kann. Derartige Einparkhilfen gehören mittlerweile zu den Sonderausstattungen von Fahrzeugen der Mittelklasse.

In einer weiteren Ausführungsform, wie dies beispielsweise in der DE 10 2005 017 360 A1 geschildert ist, umfasst ein Einparkassistent für das Einparken eines Kraftfahrzeuges mindestens eine Anzeigevorrichtung, eine Vorrichtung zum Vermessen von Parklücken und/oder Parktaschen, ein Steuergerät und einen Lenkaktuator, wobei die Vorrichtung eine Anzeigeeinrichtung mit einer Vielzahl von Anzeigezuständen aufweist, die den Fahrer über Parklücken oder Parktaschen betreffende Parameter und über Systemzustände des Einparkassistenten informiert.

In der weiteren Ausbaustufe wird ein automatischer Parkvorgang nach vorheriger Vermessung der Parklücke durchgeführt, wie dies beispielsweise in der DE 3813083 A1 beschrieben ist. Die bekannte Vorrichtung umfasst vier Schalter bezüglich der Wahl des Parkszenarios, über die der Fahrer den Ort und die Art der Parklücke angeben kann. Somit kann der Fahrer selektieren zwischen linke Parklücke, linke Parktasche, rechte Parklücke oder rechte Parktasche.

Die Druckschrift DE 10 2009 041 587 A1 zeigt eine Fahrerassistenzeinrichtung mit einer Steuereinrichtung, die Steuersignale an eine Antriebs- oder Lenkvorrichtung des Kraftfahrzeugs ausgibt. Die Steuersignale veranlassen dann ein Durchführen eines autonomen bzw. vollautomatischen Parkvorgangs. Ferner kann die Steuereinrichtung Befehle von einer Fernbedienung empfangen und nach Empfangen eines vorbestimmten Unterbrechungsbefehls einen bereits begonnenen Parkvorgang des Kraftfahrzeugs unterbrechen. Die Fahrerassistenzeinrichtung umfasst zumindest eine Kamera, die mit der Steuereinrichtung gekoppelt ist und die Bilddaten über einen Umgebungsbereich des Kraftfahrzeugs bereitstellt, wobei die Steuereinrichtung Signale an die Fernbedienung sendet, welche die durch die Kamera gewonnenen Bilddaten oder daraus berechnete Bilddaten umfassen.

Ferner zeigt die Druckschrift DE 10 2009 027 650 A1 eine Vorrichtung zum unterstützten Einparken eines Fahrzeugs in eine Parklücke, mit wenigstens einer Sensoreinrichtung, mit der eine Erkennung zumindest eines Objektes in einem Nahbereich des Fahrzeugs möglich ist. Die Vorrichtung ist zur numerischen Bestimmung des Vorhandenseins wenigstens eines Objektes in einem Fernbereich des Fahrzeugs ausgebildet, wobei die numerische Bestimmung des Objektes im Fernbereich auf Grundlage des erkannten Objektes im Nahbereich erfolgt. Unter Objekte werden beispielsweise parkende Fahrzeuge oder bauliche Einrichtungen verstanden.

Die Druckschrift JP 2009 205191 A ist als nächstliegender Stand der Technik nach dem Oberbegriff des Anspruchs 1 zu sehen und offenbart ein Verfahren zum Erkennen, ob ein Parkplatz zum Einparken geeignet ist. Dabei wird ein Sensor verwendet, der Markierungen und dergleichen erkennt, die innerhalb eines möglichen Parkraumes angeordnet sind. Ferner wird ein möglicher Parkraum darauf hinab geprüft, ob er aufgrund seiner Abmessungen zum Einparken geeignet ist. Mögliche Parkräume werden in einer Liste ausgegeben, wobei die Reihenfolge der möglichen Parkräume auf vom Fahrer gesetzten Prioritäten basiert.

Die Druckschrift JP 2001 199298 A offenbart ein Verfahren zur Einparkunterstützung, welches für mögliche Parkplätze die Schwierigkeiten beim Einparken beurteilt, beispielsweise anhand des Einparkradius, und entsprechend den Fähigkeiten des Fahrers Parkplätze beurteilt und vorschlägt.

Die Druckschrift WO 2011/029693 A1 beschreibt ein Verfahren zum Einparken eines Fahrzeugs in eine Parklücke oder zum Ausparken aus einer Parklücke, bei welchem festgestellt wird, ob eine der Parklücke gegenüberliegende Seite der Fahrbahn überfahrbar oder nicht überfahrbar ist. Entsprechend dem Kriterium "Überfahrbarkeit" wird eine geeignete Bahnplanung vorgenommen.

Die Druckschrift DE 10 2007 002 261 A1 offenbart ein Verfahren zur Unterstützung eines Kraftfahrzeugs beim Einparken, wobei zunächst mittels Sensoren Parameter möglicher Parklücken ermittelt und dem Fahrer mittels einer graphischen Bedieneinrichtung dargestellt werden. Eine Auswahl der Parklücke wird vom Fahrer mittels eines Eingabeelements der Bedieneinrichtung vorgenommen.

Bei derzeitigen Systemen zum assistierenden Einparken eines Kraftfahrzeugs in eine Parklücke muss der Fahrer das Parkszenario auswählen, da das System aus den Umfelddaten nur das Vorhandensein einer Parklücke als solche bestimmen kann, so dass der Fahrer das Parkszenario auswählen und damit die Strategie zum Einparken des Fahrzeugs festlegen muss.

Der Erfindung liegt daher die Aufgabe zugrunde, das Verfahren zum assistierenden Einparken eines Kraftfahrzeugs für den Fahrer zu vereinfachen und dem Fahrer eine Einparkstrategie vorzuschlagen.

Diese Aufgabe wird durch ein Verfahren zur Klassifikation von Parkszenarien für einen Parkassistenten eines Kraftfahrzeugs gemäß den Merkmalen des Anspruchs 1 sowie ein entsprechenden Einparkassistenzsystem gemäß den Merkmalen des Anspruchs 4 gelöst. Bevorzugte Ausführungsformen der Erfindung sind Gegenstand der Unteransprüche.

Das erfindungsgemäße Verfahren zu Klassifikation von Parkszenarien für ein Parkassistenzsystem eines Kraftfahrzeugs, wobei eine vorgegebene Anzahl von Parkszenarien definiert sind, jedes Parkszenario durch eine vorgegebene Anzahl von parkszenariotypischen Kriterien beschrieben wird und die Kriterien zumindest auf parklückenspezifischen Parametern basieren, weist die folgenden Schritte auf:
- Bestimmen von Daten des Umfeldes des Kraftfahrzeugs mittels einer Umfeldsensorik des Kraftfahrzeugs,
- Bestimmen von parklückenspezifischen Parametern aus den Umfelddaten,
- Überprüfen der Kriterien jedes Parkszenarios anhand der parklückenspezifischen Parametern, und
- Klassifikation jedes Parkszenarios anhand der überprüften Kriterien.

Dabei sind zumindest die folgenden Parkszenarien "rückwärts Einparken in eine Querparklücke", "rückwärts Einparken in eine Längsparklücke", vorwärts Einparken in eine Querparklücke", "vorwärts Einparken in eine Längsparklücke" und "vorwärts Einparken in eine Schrägparklücke" mittel entsprechenden szenariotypischen Kriterien definiert, wobei die Parkszenarien noch bezüglich der Fahrzeugseite differenziert werden können. Ferner kann noch das seltenere Szenario "rückwärts Einparken in eine Schrägparklücke" oder "Einparken in eine Schrägparklücke entgegengesetzt zur Fahrtrichtung" definiert sein.

Gemäß dem Verfahren werden Parkszenarios, wie beispielsweise ein rückwärtiges Einparken in eine Längsparklücke, durch eine vorgegebene Anzahl von Kriterien definiert oder beschrieben. Anhand von Umfelddaten werden parklückenspezifische Parameter, wie beispielsweise die Länge und die Tiefe eines als Parklücke geeigneten Freiraums bestimmt. Die so bestimmten Parameter werden dann zur Überprüfung der Kriterien des Parkszenarios eingesetzt. Ist also beispielsweise die Länge des Freiraums größer als eine zum Einparken notwendige Mindestlänge und ist die Parklückentiefe auch ausreichend, so könnte der Freiraum als Parklücke für das genannte Einparkszenario geeignet sein und das Einparkszenario wird entsprechend klassifiziert. Mit dem Verfahren kann daher jedes Szenario beurteilt werden und dem Fahrer kann anhand der Klassifikation das am meisten geeignete Szenario zum Einparken angeboten werden, wodurch das erfindungsgemäße Verfahren den fahrerseitigen Bedienungskomfort erhöht.

Vorzugsweise basieren die Kriterien der Parklückenszenarien ferner auf kraftfahrzeugspezifischen Parametern und/oder fahrerspezifischen Parametern und/oder früheren Parkszenarios und/oder Navigationsdaten. Dabei können kraftfahrzeugspezifische Parameter oder fahrerspezifische Parameter beispielsweise der Lenkwinkel oder das Einlenken des Fahrzeugs sein, aus dem der Wunsch des Fahrers zum Einparken in eine potentielle Parklücke geschlossen werden kann. Ferner kann aus der Historie des Fahrverlaufs, mit anderen Worten aus früheren Parkszenarien, auf das aktuelle Parkszenario geschlossen werden. Ist beispielsweise das Fahrzeug innerhalb eines vorgegebenen Zeitintervalls an mehreren Querparklücken und entsprechenden parkenden Objekten vorbei gefahren, so wird das aktuelle Parkszenario mit hoher Wahrscheinlichkeit wieder eine Querparklücke sein. Auch aus Navigationsdaten lassen sich Informationen bezüglich eines aktuellen Parkszenarios entnehmen, beispielsweise wenn sich aus den Navigationsdaten ergibt, dass sich das Fahrzeug auf einem Parkplatz befindet.

Mit anderen Worten, es gibt eine Menge von grundlegenden Kriterien, die zur Beschreibung der Parkszenarios verwendet werden, wobei zur Beschreibung eines spezifischen Parkszenarios nur parkszenariotypische Kriterien verwendet werden. Die parkszenariotypischen Kriterien bilden daher eine Teilmenge der Menge der grundlegenden Kriterien.

Dabei erfolgt die Beurteilung der Parkszenarios durch eine Bewertung der einzelnen Kriterien jedes Parkszenarios, wobei die Einzelbewertungen zu einer Klassifikation jedes Parkszenarios zusammengefasst werden. Dabei kann die Beurteilung oder Klassifikation anhand einer Zuordnung von Wahrscheinlichkeiten oder durch eine Verteilung von Punktwerten erfolgen. Ferner können logische Variable zur Beurteilung eines Parkszenarios verwendet werden. Ist beispielsweise die Länge eines Freiraums nicht ausreichend für eine Längsparklücke, so kann Parkszenarien wie vorwärts oder rückwärts Einparken in eine Längsparklücke anhand der logischen Variablen ausgeschlossen werden. Mit anderen Worten, die Klassifikation ist dann dergestalt, dass diese Parkszenarien nicht in Frage kommen. Kommen für einen Einparkvorgang mehrere Parkszenarien in Frage, so wird beispielsweise das Parkszenario höher klassifiziert, dessen Ausgangspunkt zum Einparken geeigneter ist. Es kommt daher darauf an, die Klassifikation so zu gestalten, dass ein optimales Einparken möglich ist.

Das erfindungsgemäße Einparkassistenzsystem zum Einparken eines Kraftfahrzeugs in eine Parklücke unter Verwendung des im Vorangegangen beschriebenen Verfahrens zur Klassifikation von Parkszenarien, umfasst
- eine Umfeldsensorik zur Bestimmung von Umfelddaten des Kraftfahrzeugs,
- eine Speichereinrichtung zum Abspeichern einer vorgegebenen Anzahl von Parkszenarien mit parkszenariotypischen Kriterien,
- eine Einrichtung zum Bestimmen von kriterienrelevanten Parametern zumindest aus den Umfelddaten,
- eine Überprüfungseinrichtung zum Überprüfen der Kriterien jedes Parkszenarios anhand der kriterienrelevanten Parametern,
- eine Klassifikationseinrichtung zum Klassifizieren der Parkszenarios anhand der überprüften Kriterien, und
- eine Auswahleinrichtung zum Auswählen des Parkszenarios mit der höchsten Klassifikation als das wahrscheinlichste Parkszenario.

Dabei sind zumindest die folgenden Parkszenarien "rückwärts Einparken in eine Querparklücke", "rückwärts Einparken in eine Längsparklücke", vorwärts Einparken in eine Querparklücke", "vorwärts Einparken in eine Längsparklücke" und "vorwärts Einparken in eine Schrägparklücke" mittel entsprechenden szenariotypischen Kriterien definiert.

Durch die erfolgte Klassifikation der Parkszenarios wird dann dem Fahrer das am besten geeignete Szenario zum Einparken vorgeschlagen oder automatisch verwendet, wodurch die Fahrsicherheit und der Fahrerkomfort erhöht werden.

Vorzugsweise umfassen die parkszenariotypischen Kriterien ferner kraftfahrzeugspezifische Parameter und/oder fahrerspezifische Parameter und/oder frühere Parkszenarios und/oder Navigationsdaten. Damit ist es möglich, die verwendeten Kriterien beispielsweise an im Kraftfahrzeug vorhandene Möglichkeiten anzupassen. Ist im Kraftfahrzeug kein Navigationssystem vorhanden, können auch keine entsprechenden Kriterien zur Definition von Parkszenarien verwendet werden.

Weiter bevorzugt nimmt die Klassifikationseinrichtung eine wahrscheinlichkeitsbasierte oder eine punktegestützte Bewertung der Kriterien und der Parkszenarios vor. So kann beispielsweise bei einer punktegestützten Bewertung jedem Kriterium eines Parkszenarios bei Erfüllung des Kriteriums Punkte zugewiesen werden. Ist beispielsweise ein als Längs- oder Querparklücke geeigneter Freiraum ermittelt worden, so wird dem Kriterium Parklückenlänge hinsichtlich des Längseinparkens andere Punkte zugewiesen als für das Parkszenario Quereinparken. Ebenso können einige Kriterien als Ausschlusskriterien ausgelegt sein, da bei einer nicht ausreichenden Breite einer Parklücke diese nicht verwendet werden kann. Die Klassifikation muss daher entsprechend ausgelegt sein.

Vorzugsweise basiert die Umfeldsensorik zumindest auf ultraschallbasierter 2D-Umfelddateninformation. Die Verwendung von Ultraschallsensoren ist der kostengünstigste Weg zur Realisierung des Einparkassistenzsystems, was jedoch die Verwendung von Umfeldsensoriken basierend auf Video, Laser oder Radar nicht ausschließt.

Vorzugsweise weist das Einparksystem eine Vorrichtung zur Überstimmung der automatischen Klassifikation und Auswahl der Parklücke durch den Fahrer auf, so dass der Fahrer letztlich die Entscheidung über den Einparkvorgang behalten kann.

Eine bevorzugte Ausführungsform der Erfindung wird nachfolgend anhand der Zeichnungen erläutert. Dabei zeigt
- Fig. 1: das Parkszenario "Rückwärts Einparken in eine Querparklücke,
- Fig. 2: das Parkszenario "Rückwärts Einparken in ein Längsparklücke",
- Fig. 3: das Parkszenario "Vorwärts Einparken in ein Querparklücke",
- Fig. 4: das Parkszenario "Vorwärts Einparken in eine Schrägparklücke", und
- Fig. 5: Ultraschallmesssignale eines Schrägparklückenszenarios.

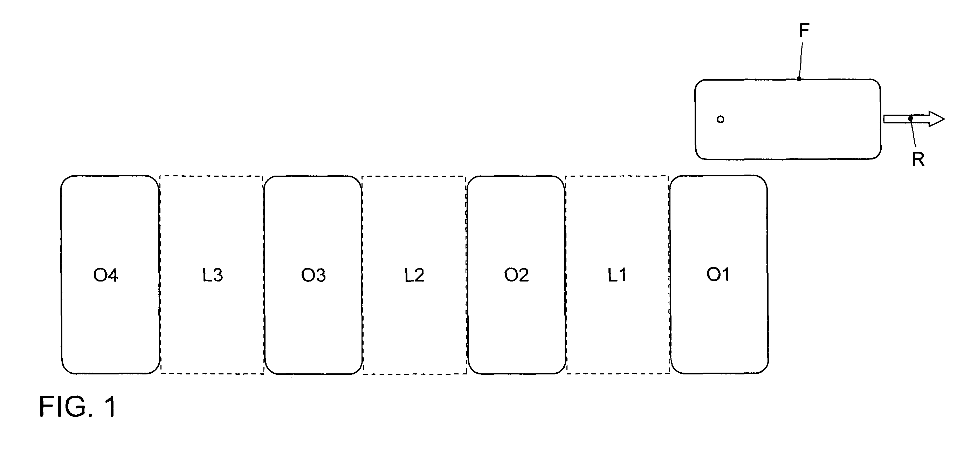

Fig. 1 zeigt ein Beispiel des Parkszenarios "rückwärts Einparken in eine Querparklücke. Dabei bewegt sich ein Eigenfahrzeug F in Richtung des Pfeiles R entlang einer Reihe parkender Objekte O1, 02, 03, 04 und das Einparksystem (nicht dargestellt) des Eigenfahrzeugs F hat neben den genannten Objekten O1, 02, 03, 04, die üblicherweise durch parkende Fahrzeuge realisiert sind, die zwischen den Objekten befindlichen Feiräume oder Lücken L1, L2, L3 gefunden.

Folgende Kriterien für das Erkennen einer Querparklücke im Parkszenario "rückwärts Einparken in eine Querparklücke" können in Frage kommen und überprüft werden:
- Breite der Objekte, die den letzten querparkfähigen Freiraum begrenzen. Dies wäre in dem Beispiel der Fig.1 die Breite der Objekte O1 und 02, die den Freiraum L1 begrenzen,
- Anzahl der bisher aufgefundenen querparkfähigen Freiräume. Dies sind im Beispiel der Fig.1 die drei Lücken L1, L2 und L3,
- kein Bordsteinobjekt oder sonstiges Objekt in den Freiräumen L1, L2 oder L3,
- Breite des zuletzt aufgefundenen Freiraums L1, und
- Tiefe des zuletzt aufgefundenen Freiraums L1.

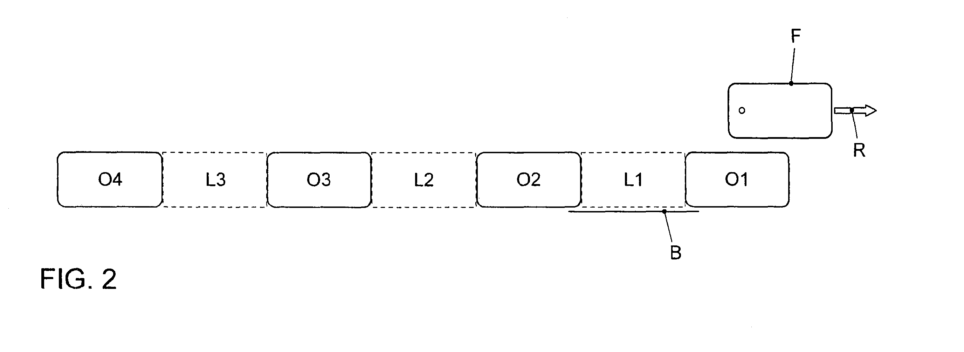

Fig. 2 zeigt in beispielhafter Darstellung das Parkszenario "rückwärts Einparken in eine Längsparklücke" auf der Beifahrerseite, wobei sich das Eigenfahrzeug F in Richtung des Pfeiles R an den Objekten O1, 02 und 03, die parkende Fahrzeuge darstellen, vorbeibewegt hat. Zwischen den Objekten O1, 02 und 03 sind Freiräume L1, L2, L3 angeordnet, die gegebenenfalls als Längsparklücken geeignet sein können.

Für das Parkszenario "rückwärts Einparken in eine Längsparklücke können die folgenden Kriterien überprüft werden:
- Breite der Objekte, die den letzten längsparkfähigen Freiraum begrenzen. Dies wäre in dem Beispiel der Fig. 2 die Breite der Objekte O1 und 02, die den Freiraum L1 begrenzen,
- Anzahl der bisher aufgefundenen längsparkfähigen Freiräume. Diese sind im Beispiel der Fig. 2 die drei Lücken L1, L2 und L3,
- kein Bordsteinobjekt oder sonstiges Objekt in den Freiräumen L1, L2 oder L3,
- Länge des zuletzt aufgefundenen Freiraums L1,
- Tiefe des zuletzt aufgefundenen Freiraums L1, und
- der Bordstein B befindet sich in bestimmter Freiraumtiefe.

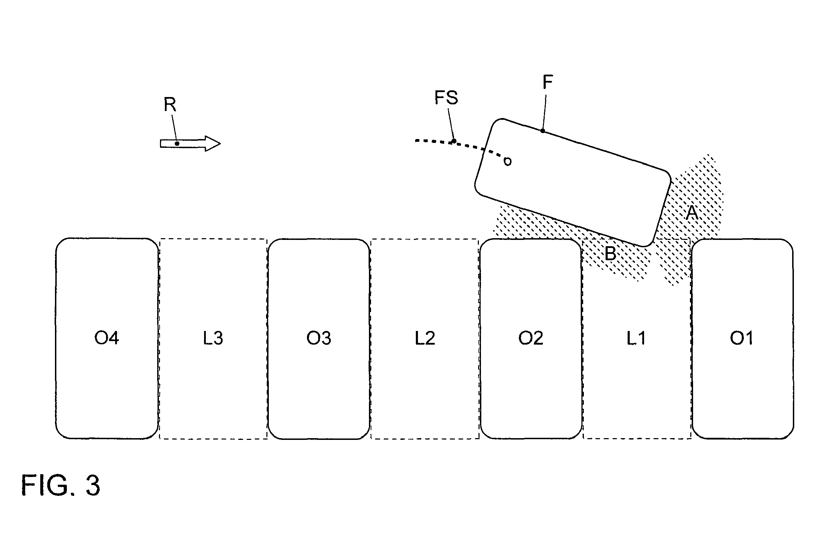

Fig. 3 zeigt das Beispiel des Parkszenarios "vorwärts Einparkens in eine Querparklücke" auf der Beifahrerseite. Das Eigenfahrzeug F hat sich in Richtung des Pfeils R an einer Reihe von Objekten O1, 02, 03 und 04, üblicherweise parkende Fahrzeuge, vorbei bewegt, wobei zwischen den Objekten O1, 02, 03 und 04 Freiräume L1, L2 und L3 angeordnet sind. Das Eigenfahrzeug F möchte entlang der Fahrspur FS vorwärts in den Freiraum L1 einparken, wozu der Fahrer das Fahrzeug eingelenkt hat.

Die folgenden Kriterien können für das Erkennen einer Querparklücke im Parkszenario "vorwärts Einparken in eine Querparklücke" in Frage kommen und überprüft werden:
- Breite der Objekte, die den letzten querparkfähigen Freiraum begrenzen. Dies wäre in dem Beispiel der Fig. 3 die Breite der Objekte O1 und 02, die den Freiraum L1 begrenzen,
- Anzahl der bisher aufgefundenen querparkfähigen Freiräume. Diese sind im Beispiel der Fig. 3 die drei Lücken L1, L2 und L3,
- kein Bordsteinobjekt oder sonstiges Objekt in den Freiräumen L1, L2 oder L3,
- Breite des zuletzt aufgefundenen Freiraums L1,
- Tiefe des zuletzt aufgefundenen Freiraums L1,
- Erkennen eines Objektes O1 in einem Bereich A vor dem Eigenfahrzeug F, und
- Erkennen eines Objektes 02 in einem Bereich B seitlich des Eigenfahrzeugs F.

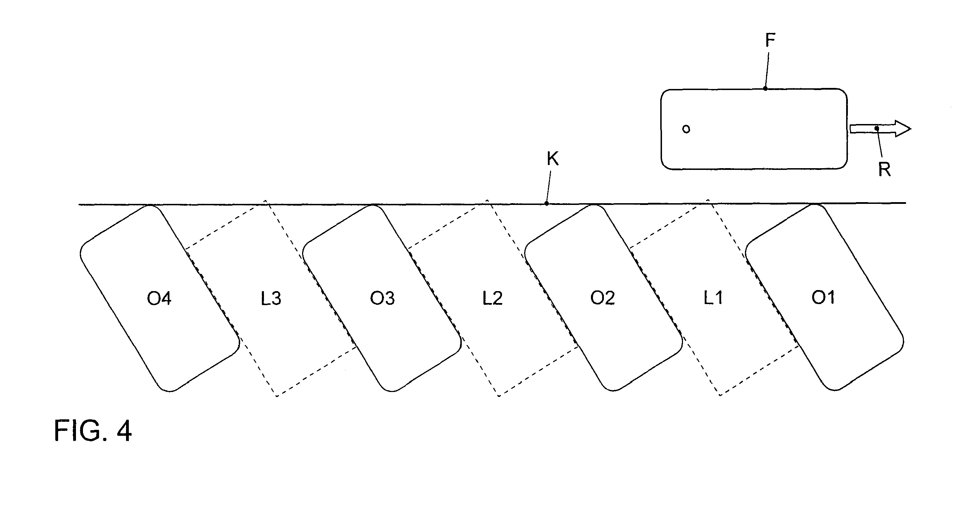

Fig. 4 zeigt ein Schrägparksituation auf der Beifahrerseite, wie sie für das Parkszenario "vorwärts Einparken in eine Schrägparklücke" typisch ist. Hier sind als Objekte O1, PO2, 03 und 04 bezeichnenden parkenden Fahrzeuge unter einem Winkel gegen die durch die Objekte O1, 02, 03 und 04 gebildete Kante K in Form einer "Fischgräte" angeordnet, wobei die Kante parallel zur Fahrrichtung des Pfeiles R des Fahrzeugs F ausgerichtet ist. Zwischen den unter einem Winkel angeordneten Objekte O1, 02, 03 und 04 sind Freiräume L1, L2 und L3 zu erkennen, die zum Schrägparken genutzt werden könnten.

Dabei können die folgenden Kriterien für das Erkennen einer Schrägparklücke im Parkszenario "vorwärts Einparken in eine Querparklücke" in Frage kommen und überprüft werden:
- Breite der Objekte, die den letzten schrägparkfähigen Freiraum begrenzen. Dies wäre in dem Beispiel der Fig. 4 die Breite der Objekte O1 und 02, die den Freiraum L1 begrenzen,
- Anzahl der bisher aufgefundenen schrägparkfähigen Freiräume. Diese sind im Beispiel der Fig. 4 die drei Lücken L1, L2 und L3,
- kein Bordsteinobjekt oder sonstiges Objekt in den Freiräumen L1, L2 oder L3,
- Breite des zuletzt aufgefundenen Freiraums L1,
- Tiefe des zuletzt aufgefundenen Freiraums L1, und
- Winkel der Längsachse des zuletzt aufgefundenen Freiraums L1 gegenüber der Kante K und/oder Winkel der vorderen Begrenzung der Objekte O1 und 02 gegenüber der Fahrtrichtung R bzw. der Kante K.

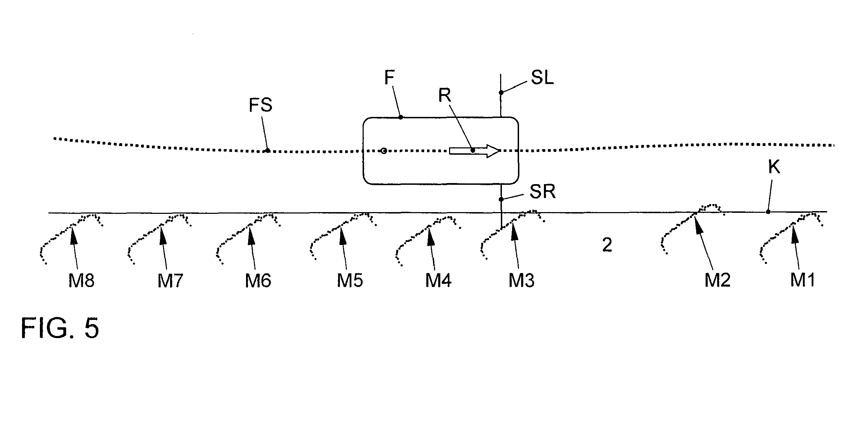

Fig. 5 zeigt ein Beispiel einer Fischgräte, d.h. einer beifahrerseitigen Schrägparksituation, wie sich diese Situation anhand von Messsignalen einer Ultraschallsensorik darstellen würde. Ein Eigenfahrzeug F bewegt sich entlang einer Fahrspur FS in Richtung des Pfeiles R. Das Eigenfahrzeug weist linksseitige und rechtsseitige Ultraschallsensoren SL und SR auf. Dier rechtseitige Ultraschallsensor SR würde entlang des Fahrwegs FS Messreihen M8 bis M1 aufnehmen, wobei jede der Messreihen M8 bis M1 offensichtlich eine vordere Begrenzung eines parkenden Fahrzeugs darstellen, so dass für jede Messreihe M1 bis M8 ein Winkel gegenüber der Kante K ermittelte werden kann. Zwischen den Messreihen M3 und M2 ist ein zum Schrägparken eventuell geeigneter Freiraum L2 zu erkennen.

## Patentansprüche

1. Verfahren zu Klassifikation von Parkszenarien für ein Parkassistenzsystem eines Kraftfahrzeugs (F), wobei eine vorgegebene Anzahl von Parkszenarien definiert sind und jedes Parkszenario durch eine vorgegebene Anzahl von parkszenariotypischen Kriterien beschrieben wird, wobei die Kriterien zumindest auf parklückenspezifischen Parametern basieren, und
wobei das Verfahren die folgenden Schritte aufweist:
Bestimmen von Daten des Umfeldes des Kraftfahrzeugs (F) mittels einer Umfeldsensorik des Kraftfahrzeugs (F),
Bestimmen von parklückenspezifischen Parametern aus den Umfelddaten,
Überprüfen der Kriterien jedes Parkszenarios anhand der parklückenspezifischen Parametern, und
Klassifikation jedes Parkszenarios anhand der überprüften Kriterien,
**dadurch gekennzeichnet, dass**
zumindest die folgenden Szenarien: "rückwärts Einparken in eine Querparklücke",
"rückwärts Einparken in eine Längsparklücke", vorwärts Einparken in eine Querparklücke", "vorwärts Einparken in eine Längsparklücke" und "vorwärts Einparken in eine Schrägparklücke" definiert sind und
zumindest die folgenden Kriterien zur Beschreibung der Parkszenarios verwendet werden, wobei jedes Parkszenario eine parkszenariotypische Auswahl der Kriterien umfasst:
Begrenzende Objekte einer Parklücke, Tiefe der Parklücke, Breite der Parklücke, Hintergrundobjekte, Objekte im Umfeld des Kraftfahrzeugs, Objekte in einer Parklücke, Einlenken des Fahrzeugs, Orientierung der begrenzenden Objekte und Historie einschließlich Beurteilung der früheren Parkszenarios, wobei
die Beurteilung der Parkszenarios durch eine Bewertung der einzelnen Kriterien jedes Parkszenarios erfolgt, wobei die Einzelbewertungen zu einer Klassifikation jedes Parkszenarios zusammengefasst werden.

2. Verfahren nach Anspruch 1, **dadurch gekennzeichnet, dass** die Kriterien der Parklückenszenarien ferner auf kraftfahrzeugspezifischen Parametern und/oder fahrerspezifischen Parametern und/oder früheren Parkszenarios und/oder Navigationsdaten basieren.

3. Verfahren nach Anspruch 1 oder 2, **dadurch gekennzeichnet, dass** die Klassifikation anhand einer Zuordnung von Wahrscheinlichkeiten oder durch eine Verteilung von Punktwerten erfolgt.

4. Einparkassistenzsystem zum Einparken eines Kraftfahrzeugs (F) in eine Parklücke (L1, L2, L3) unter Verwendung des Verfahrens zur Klassifikation von Parkszenarien nach einem der vorangegangenen Ansprüche, mit einer Umfeldsensorik (SL, SR) zur Bestimmung von Umfelddaten des Kraftfahrzeugs (F), wobei das Einparkassistenzsystem aufweist:
eine Speichereinrichtung zum Abspeichern einer vorgegebenen Anzahl von Parkszenarien mit parkszenariotypischen Kriterien,
eine Einrichtung zum Bestimmen von kriterienrelevanten Parametern zumindest aus den Umfelddaten,
eine Überprüfungseinrichtung zum Überprüfen der Kriterien jedes Parkszenarios anhand der kriterienrelevanten Parameter,
eine Klassifikationseinrichtung zum Klassifizieren der Parkszenarios anhand der überprüften Kriterien, und
eine Auswahleinrichtung zum Auswählen des Parkszenarios mit der höchsten Klassifikation als das wahrscheinlichste Parkszenario
**dadurch gekennzeichnet, dass**
zumindest die folgenden Szenarien: "rückwärts Einparken in eine Querparklücke",
"rückwärts Einparken in eine Längsparklücke", vorwärts Einparken in eine Querparklücke", "vorwärts Einparken in eine Längsparklücke" und "vorwärts Einparken in eine Schrägparklücke" definiert sind und
zumindest die folgenden Kriterien zur Beschreibung der Parkszenarios verwendet werden, wobei jedes Parkszenario eine parkszenariotypische Auswahl der Kriterien umfasst:
Begrenzende Objekte einer Parklücke, Tiefe der Parklücke, Breite der Parklücke, Hintergrundobjekte, Objekte im Umfeld des Kraftfahrzeugs, Objekte in einer Parklücke, Einlenken des Fahrzeugs, Orientierung der begrenzenden Objekte und Historie einschließlich Beurteilung der früheren Parkszenarios, wobei
die Beurteilung der Parkszenarios durch eine Bewertung der einzelnen Kriterien jedes Parkszenarios erfolgt, wobei die Einzelbewertungen zu einer Klassifikation jedes Parkszenarios zusammengefasst werden.

5. Einparkassistenzsystem nach Anspruch 4, **dadurch gekennzeichnet, dass** die parkszenariotypischen Kriterien ferner kraftfahrzeugspezifische Parameter und/oder fahrerspezifische Parameter und/oder frühere Parkszenarios und/oder Navigationsdaten umfassen.

6. Einparksystem nach Anspruch 4 oder 5, **dadurch gekennzeichnet, dass** die Klassifikationseinrichtung eine wahrscheinlichkeitsbasierte oder eine punktegestützte Bewertung der Kriterien und der Parkszenarios vornimmt.

7. Einparkassistenzsystem nach einem der Ansprüche 4 bis 6, **dadurch gekennzeichnet, dass** die Umfeldsensorik zumindest auf ultraschallbasierten 2D-Umfelddaten basiert.

## Claims

1. Method for classifying parking scenarios for an assistance system for parking a motor vehicle (F), a predefined number of parking scenarios being defined and each parking scenario being described by a predefined number of typical parking scenario criteria, the criteria being based at least on parking-space-specific parameters, and the method having the following steps of:
determining data relating to the environment of the motor vehicle (F) using an environment sensor system of the motor vehicle (F),
determining parking-space-specific parameters from the environment data,
checking the criteria of each parking scenario using the parking-space-specific parameters, and
classifying each parking scenario using the criteria which have been checked, **characterized in that** at least the following scenarios: "reversing into a perpendicular parking space", "reversing into a parallel parking space", "driving forward into a perpendicular parking space", "driving forward into a parallel parking space" and "driving forward into an oblique parking space" are defined and at least the following criteria are used to describe the parking scenarios, each parking scenario comprising a typical parking scenario selection of the criteria:
bounding objects of a parking space, depth of the parking space, width of the parking space, background objects, objects in the environment of the motor vehicle, objects in a parking space, turning of the vehicle, orientation of the bounding objects and history including assessment of the earlier parking scenarios, wherein the parking scenarios are assessed by evaluating the individual criteria of each parking scenario, the individual evaluations being combined to form a classification of each parking scenario.

2. Method according to Claim 1, **characterized in that** the criteria of the parking space scenarios are also based on motor-vehicle-specific parameters and/or driver-specific parameters and/or earlier parking scenarios and/or navigation data.

3. Method according to Claim 1 or 2, **characterized in that** the classification is carried out by assigning probabilities or by distributing point values.

4. Parking assistance system for parking a motor vehicle (F) in a parking space (L1, L2, L3) using the method for classifying parking scenarios according to one of the preceding claims, having an environment sensor system (SL, SR) for determining environment data relating to the motor vehicle (F), wherein the parking assistance system has:
a storage device for storing a predefined number of parking scenarios with typical parking scenario criteria,
a device for determining criteria-relevant parameters at least from the environment data,
a checking device for checking the criteria of each parking scenario using the criteria-relevant parameters,
a classification device for classifying the parking scenarios using the criteria which have been checked, and
a selection device for selecting the parking scenario with the highest classification as the most probable parking scenario, **characterized in that** at least the following scenarios: "reversing into a perpendicular parking space", "reversing into a parallel parking space", "driving forward into a perpendicular parking space", "driving forward into a parallel parking space" and "driving forward into an oblique parking space" are defined and at least the following criteria are used to describe the parking scenarios, each parking scenario comprising a typical parking scenario selection of the criteria:
bounding objects of a parking space, depth of the parking space, width of the parking space, background objects, objects in the environment of the motor vehicle, objects in a parking space, turning of the vehicle, orientation of the bounding objects and history including assessment of the earlier parking scenarios, wherein the parking scenarios are assessed by evaluating the individual criteria of each parking scenario, the individual evaluations being combined to form a classification of each parking scenario.

5. Parking assistance system according to Claim 4, **characterized in that** the typical parking scenario criteria also comprise motor-vehicle-specific parameters and/or driver-specific parameters and/or earlier parking scenarios and/or navigation data.

6. Parking system according to Claim 4 or 5, **characterized in that** the classification device carries out a probability-based or a point-based evaluation of the criteria and the parking scenarios.

7. Parking assistance system according to one of Claims 4 to 6, **characterized in that** the environment sensor system is based at least on ultrasound-based 2D environment data.

## Revendications

1. Procédé de classification de scénarios de stationnement pour un système d'assistance au stationnement d'un véhicule à moteur (F), dans lequel un nombre prédéterminé de scénarios de stationnement ont été définis et chaque scénario de stationnement est décrit par un nombre prédéterminé de critères typiques de scénarios de stationnement, dans lequel les critères sont basés au moins sur des paramètres spécifiques des emplacements de stationnement, et dans lequel le procédé présente les étapes suivantes:
- détermination de données de l'environnement du véhicule à moteur (F) au moyen de capteurs d'environnement du véhicule à moteur (F),
- détermination de paramètres spécifiques d'un emplacement de stationnement à partir des données d'environnement,
- vérification des critères de chaque scénario de stationnement à l'aide des paramètres spécifiques d'un emplacement de stationnement, et
- classification de chaque scénario de stationnement à l'aide des critères vérifiés,
**caractérisé en ce que**
- au moins les scénarios suivants: "parcage en marche arrière dans un emplacement de stationnement transversal", "parcage en marche arrière dans un emplacement de stationnement longitudinal", "parcage en marche avant dans un emplacement de stationnement transversal", "parcage en marche avant dans un emplacement de stationnement longitudinal", et "parcage en marche avant dans un emplacement de stationnement oblique" ont été définis et
- on utilise au moins un des critères suivants pour la description du scénario de stationnement, dans lequel chaque scénario de stationnement comprend une sélection de critères typique du scénario de stationnement:
- objets délimitant un emplacement de stationnement, profondeur de l'emplacement de stationnement, largeur de l'emplacement de stationnement, objets d'arrière-plan, objets dans les environs du véhicule à moteur, objets dans un emplacement de stationnement, engagement du véhicule, orientation des objets limitrophes et historique, y compris évaluation des scénarios de stationnement antérieurs, dans lequel
- l'évaluation des scénarios de stationnement est effectuée par une analyse des critères individuels de chaque scénario de stationnement, dans lequel les analyses individuelles sont rassemblées en une classification de chaque scénario de stationnement.

2. Procédé selon la revendication 1, **caractérisé en ce que** les critères des scénarios d'emplacement de stationnement se basent en outre sur des paramètres spécifiques du véhicule à moteur et/ou sur des paramètres spécifiques du conducteur et/ou sur des scénarios de stationnement antérieurs et/ou sur des données de navigation.

3. Procédé selon la revendication 1 ou 2, **caractérisé en ce que** la classification est effectuée à l'aide d'un classement de probabilités ou par une distribution de valeurs ponctuelles.

4. Système d'assistance au stationnement d'un véhicule à moteur (F) dans un emplacement de stationnement (L1, L2, L3) en utilisant le procédé de classification de scénarios de stationnement selon l'une quelconque des revendications précédentes, avec des capteurs d'environnement (SL, SR) pour la détermination de données d'environnement du véhicule à moteur (F), dans lequel le système d'assistance au stationnement présente:
- un dispositif de mémoire pour mémoriser un nombre prédéterminé de scénarios de stationnement avec des critères typiques de scénarios de stationnement;
- un dispositif pour déterminer des paramètres pertinents pour les critères au moins à partir des données d'environnement,
- un dispositif de vérification pour vérifier les critères de chaque scénario de stationnement à l'aide des paramètres pertinents pour les critères,
- un dispositif de classification pour classifier les scénarios de stationnement à l'aide des critères vérifiés, et
- un dispositif de sélection pour sélectionner le scénario de stationnement avec la classification la plus élevée comme étant le scénario de stationnement le plus probable,
**caractérisé en ce que**
- au moins les scénarios suivants: "parcage en marche arrière dans un emplacement de stationnement transversal", "parcage en marche arrière dans un emplacement de stationnement longitudinal", "parcage en marche avant dans un emplacement de stationnement transversal", "parcage en marche avant dans un emplacement de stationnement longitudinal", et "parcage en marche avant dans un emplacement de stationnement oblique" ont été définis et
- on utilise au moins un des critères suivants pour la description du scénario de stationnement, dans lequel chaque scénario de stationnement comprend une sélection de critères typique du scénario de stationnement:
- objets délimitant un emplacement de stationnement, profondeur de l'emplacement de stationnement, largeur de l'emplacement de stationnement, objets d'arrière-plan, objets dans les environs du véhicule à moteur, objets dans un emplacement de stationnement, engagement du véhicule, orientation des objets limitrophes et historique, y compris évaluation des scénarios de stationnement antérieurs, dans lequel
- l'évaluation des scénarios de stationnement est effectuée par une analyse des critères individuels de chaque scénario de stationnement, dans lequel les analyses individuelles sont rassemblées en une classification de chaque scénario de stationnement.

5. Système d'assistance au stationnement selon la revendication 4, **caractérisé en ce que** les critères typiques de scénarios de stationnement comprennent en outre des paramètres spécifiques du véhicule à moteur et/ou des paramètres spécifiques du conducteur et/ou des scénarios de stationnement antérieurs et/ou des données de navigation.

6. Système d'assistance au stationnement selon la revendication 4 ou 5, **caractérisé en ce que** le dispositif de classification opère une analyse des critères et des scénarios de stationnement basée sur la probabilité ou fondée sur des points.

7. Système d'assistance au stationnement selon l'une quelconque des revendications 4 à 6, **caractérisé en ce que** les capteurs d'environnement sont basés au moins sur des données d'environnement 2D basées sur les ultrasons.
